# EUROPÄISCHE PATENTSCHRIFT

(11) **EP 2 598 550 B1**
(45) Veröffentlichungstag und Bekanntmachung des Hinweises auf die Patenterteilung: **31.12.2014**
(21) Anmeldenummer: 11784923.2
(22) Anmeldetag: 28.07.2011
(51) Int. Cl.: C08G 18/54, C08G 18/76, B22C 1/22, C08K 3/34

(54) **BINDEMITTELSYSTEM AUF POLYURETHANBASIS ZUR HERSTELLUNG VON KERNEN UND GIESSFORMEN UNTER VERWENDUNG CYCLISCHER FORMALE, FORMSTOFFMISCHUNG UND VERFAHREN**
BINDER SYSTEM BASED ON POLYURETHANE FOR PRODUCING CORES AND CASTING MOLDS USING CYCLIC FORMALDEHYDES, MOLDING MATERIAL MIXTURE, AND METHOD
SYSTEME DE LIANT A BASE DE POLYURETHANNE PERMETTANT LA FABRICATION DE NOYAUX ET DE MOULES AU MOYEN DE FORMALS CYCLIQUES, MELANGE DE MATIERES A MOULER ET PROCEDE

(30) Priorität: 30.07.2010 DE 102010032734
(43) Veröffentlichungstag der Anmeldung: 05.06.2013
(73) Patentinhaber: ASK Chemicals GmbH, 40721 Hilden (DE)
(72) Erfinder: PRIEBE, Christian, 42489 Wülfrath (DE); KOCH, Diether, 40822 Mettmann (DE)
(74) Vertreter: Müller Schupfner & Partner Patent- und Rechtsanwaltspartnerschaft mbB
(86) Internationale Anmeldenummer: PCT/DE2011/001525
(87) Internationale Veröffentlichungsnummer: WO 2012/025084

(56) Entgegenhaltungen:
- WO-A2-2009/095251
- DE-A1- 2 243 392
- DE-A1- 2 711 052
- DE-A1- 3 139 484
- US-A- 2 907 719
- US-A- 4 460 629

## Beschreibung

Die vorliegende Erfindung betrifft ein Bindemittelsystem auf Polyurethanbasis unter Verwendung cyclischer Formale zur Herstellung von Kernen und Gießformen, eine Formstoffmischung enthaltend das Bindemittel und ein Verfahren unter Verwendung des Bindemittels zur Herstellung von Gießformen.

Die unter der Bezeichnung "Cold-Box-Verfahren" oder "Ashland-Verfahren" bekannt gewordene Methode der Kernherstellung hat in der Gießereiindustrie große Bedeutung erlangt. Zur Bindung eines feuerfesten Formgrundstoffes werden dabei Zwei-Komponenten-Polyurethan-Systeme eingesetzt. Die Polyol-Komponente besteht aus einem Polyol mit mindestens zwei OH-Gruppen pro Molekül, die Isocyanat-Komponente aus einem Polyisocyanat mit mindestens zwei NCO-Gruppen pro Molekül. Die Aushärtung des Bindemittelsystems erfolgt mit Hilfe von basischen Katalysatoren. Flüssige Basen können dem Bindemittelsystem vor der Formgebung zugemischt werden, um die beiden Komponenten zur Reaktion zu bringen (US 3,676,392). Eine weitere Möglichkeit besteht darin, gasförmige tertiäre Amine nach der Formgebung durch das Formstoff-Bindemittelsystem-Gemisch (US 3,409,579) zu leiten.

Nach der US 3,676,392 und der US 3,409,579 werden Phenolharze als Polyole eingesetzt, die durch Kondensation von Phenol mit Aldehyden, vorzugsweise Formaldehyd, in flüssiger Phase bei Temperaturen bis ca. 130°C in Gegenwart katalytischer Mengen von Metallionen erhalten werden. In der US 3,485,797 wird die Herstellung solcher Phenolharze detailliert beschrieben. Außer unsubstituiertem Phenol können substituierte Phenole, vorzugsweise o-Kresol und p-Nonylphenol, zum Einsatz kommen (vergleiche z.B. US 4,590,229). Als weitere Reaktionskomponente können nach der EP 0177871 A2 mit aliphatischen Monoalkohol-Gruppen mit ein bis acht Kohlenstoffatomen modifizierte Phenolharze eingesetzt werden. Durch die Alkoxylierung sollen die Bindemittelsysteme eine erhöhte thermische Stabilität besitzen. Als Lösungsmittel für die Polyol-Komponente werden überwiegend Gemische aus hochsiedenden polaren Lösungsmitteln (z.B. Ester und Ketone) und hochsiedenden aromatischen Kohlenwasserstoffen eingesetzt. Die Polyisocyanate werden dagegen bevorzugt in hochsiedenden aromatischen Kohlenwasserstoffen gelöst.

In der EP 0771599 A1 und der WO 00/25957 A1 werden Formulierungen beschrieben, bei denen durch Verwendung von Fettsäureestern ganz oder zumindest weitgehend auf aromatische Lösungsmittel verzichtet werden kann.

Aus der US 4,051,092 sind Polyurethansysteme bekannt, in denen Epoxyharze, Polyesterharze oder wässrige Phenol-Formaldehydharze mit Diisocyanaten umgesetzt werden in Gegenwart eines Lösungsmittels der Formel 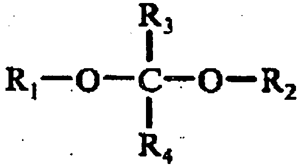 worin R₁ und R₂ für Kohlenwasserstoffe mit 3 bis 6 Kohlenstoffen und R₃ und R₄ für Methyl, Ethyl, Phenyl oder Wasserstoff stehen. Ausdrücklich benannt sind Dibutoxymethan, Dipropoxymethan, Diisobutoxymethan, Dipenthyloxymethan, Dihexyloxymethan, Dicyclohexyloxymethan, n-Butoxyisopropoxymethan, Isobutoxybutoxymethan und Isopropoxypentyloxymethan, Acethaldehyd-n-propylacetal, Benzaldehyd-n-butylacetal, Acetaldehyd-n-butylacetal, Aceton-di-n-butylketal und Acetophenon-dipropylketal. In den Beispielen wird das Ketal Butylal (1-(Butoxymethoxy)butan) eingesetzt. Einen ähnlichen Offenbarungsgehalt haben die US 4,116,916 und die US 4,172,068.

Die Verwendung von Diacetalen, nämlich Umsetzungsprodukten von C₂- bis C₆-Dialdehyden und C₂- bis C₁₂-Alkoholen, in Polyurethansystemen ist in der WO 2006/092716 A1 offenbart. Als Diacetale sind genannt 1,1,2,2-Tetramethoxyethan, 1,1,2,2-Tetraethoxyethan, 1,1,2,2-Tetrapropoxyethan, 1,1,3,3-Tetramethoxypropan, 1,1,3,3-Tetraethoxypropan. Es wurde festgestellt, dass die Diacetale eine Verlängerung der Verarbeitungszeit der Formstoffmischungen ermöglichen. Dies geht jedoch erheblich zu Lasten der Festigkeit der frischen Mischungen ("Shoot immediate"). Der Festigkeitsverlust gegenüber dem unmodifizierten Bindemittel liegt zwischen ca. 15 % und ca. 20 %.

Für die meisten Anwendungen ist das Festigkeitsniveau der mit den bekannten Polyurethan-Bindemitteln hergestellten Kerne und Formen durchaus hoch genug. Dennoch besteht ein großes Interesse daran, die Festigkeiten noch weiter anzuheben, um den Bindemittelgehalt möglichst ohne Festigkeitsverluste absenken zu können, d.h. ohne dabei das für einen guten Guss und ein sicheres Handling notwendige Niveau zu unterschreiten. Für eine Bindemittelreduzierung gibt es mehrere Gründe, z.B. um die beim Gießen entstehenden Gase und Kondensate zu reduzieren, die sowohl zu Gussfehlern als auch zur Belastung der Umwelt führen können. Weiterhin wird durch einen niedrigen Bindemittelgehalt der Aufwand für die Regenerierung des Altsandes verringert und nicht zuletzt sind die Gießereien aus kommerziellen Gründen daran interessiert, möglichst wenig Bindemittel einzusetzen.

Bei den Festigkeiten ist vor allem auf ausreichende Anfangsfestigkeiten zu achten, insbesondere, wenn die Kerne unmittelbar nach ihrer Herstellung in (teil-) automatisierten Anlagen zu komplexen Kernpaketen zusammengebaut oder in metallische Dauerformen eingelegt werden sollen.

Der Erfindung lag daher die Aufgabe zugrunde, eine Formstoffmischung bereitzustellen, mittels derer sich Formkörper für die Gießereiindustrie herstellen lassen, welche gegenüber Formkörpern, die aus einer mit einem herkömmlichen Bindemittel versehenen Formstoffmischung hergestellt wurden, höhere Anfangsfestigkeiten aufweisen, z.B. um mindestens 10 % höhere Anfangsfestigkeiten. Es wurde gefunden, dass dies genutzt werden kann, um den Bindergehalt um ca. 5 bis 10% absenken, um dennoch auch bei technischer Serienfertigung Kerne mit ausreichend hohen Festigkeiten für eine zuverlässige Handhabung zu erhalten.

Diese Aufgabe wurde gelöst mit der Ausführungsform gemäß Patentanspruch 1. Vorteilhafte Ausführungsformen sind Gegenstand der abhängigen Patentansprüche oder nachfolgend beschrieben.

Gegenstand der Erfindung ist ein Bindemittel für Formstoffmischungen, enthaltend
(A) zumindest eine Polyol-Komponente aufweisend ein Polyol mit mindestens zwei OH-Gruppen pro Molekül, wobei die Polyol-Komponente zumindest ein Phenolharz umfasst, und
(B) zumindest eine Isocyanat-Komponente aufweisend ein Polyisocyanat mit mindestens zwei NCO-Gruppen pro Molekül und
(C) zumindest ein cyclisches Formal wie in Anspruch 1 beschrieben.

Weiterhin betrifft die Erfindung Formstoffmischungen, die feuerfeste Formgrundstoffe und bis zu 5 Gew.-%, bevorzugt bis zu 4 Gew.-%, besonders bevorzugt bis zu 3 Gew.-% des erfindungsgemäßen Bindemittelsystems, bezogen auf das Gewicht der feuerfesten Formgrundstoffe, umfassen. Als Feuerfeststoffe können dabei beispielsweise Quarz-, Zirkon- oder Chromerzsand, Olivin, Schamotte und Bauxit verwendet werden. Weiterhin können auch synthetisch hergestellte Formgrundstoffe verwendet werden, wie z.B. Aluminiumsilikathohlkugeln (sog. Microspheres), Glasperlen, Glasgranulat oder die unter der Bezeichnung "Cerabeads" bzw. "Carboaccucast" bekannten kugelförmigen keramischen Formgrundstoffe. Mischungen der genannten Feuerfeststoffe sind ebenfalls möglich.

Die Erfindung betrifft ebenfalls ein Verfahren zur Herstellung eines Gießformteils oder eines Kerns, umfassend
(a) Vermischen von Feuerfeststoffen mit dem erfindungsgemäßen Bindemittelsystem in einer bindenden Menge von 0,2 bis 5 Gew,-%, bevorzugt 0,3 bis 4 Gew.-%, besonders bevorzugt 0,4 bis 3 Gew.-%, bezogen auf die Menge der Feuerfeststoffe, zum Erhalt eines Gießgemisches;
(b) Einbringen des in Schritt (a) erhaltenen Gießgemisches in ein Formwerkzeug;
(c) Härten des Gießgemischs im Formwerkzeug, um ein selbsttragendes Gießformteil zu erhalten; und
(d) anschließendes Trennen des gehärteten Gießgemischs vom Werkzeug und ggf. weiteres Härten, wodurch man ein hartes, festes, ausgehärtetes Gießformteil erhält.

Überraschend wurde gefunden, dass sich die Verwendung von cyclischen Formalen als Teil der Bindemittelformulierung positiv auf die Festigkeiten auswirkt. Die relative Steigerung der Festigkeiten, insbesondere die der Anfangsfestigkeiten, ist besonders ausgeprägt bei Binderformulierungen mit einem reduzierten Anteil an Phenolharz in der Polyolkomponente. Als weiterer Vorteil wurde gefunden, dass die cyclischen Formale die Tieftemperaturbeständigkeit der Bindemittelkomponente verbessern.

Die Polyolkomponente weist Phenol-Aldehyd-Harze auf, hier vorliegend verkürzt Phenolharze genannt. Zur Herstellung der Phenolharze sind alle herkömmlich verwendeten Phenol-Verbindungen geeignet. Neben unsubstituierten Phenolen können substituierte Phenole oder Gemische hiervon eingesetzt werden. Die Phenol-Verbindungen sind vorzugsweise entweder in beiden ortho-Positionen oder in einer ortho- und in der para-Position nicht substituiert. Die verbleibenden Ring-Kohlenstoffatome können substituiert sein. Die Wahl des Substituenten ist nicht besonders beschränkt, sofern der Substituent die Reaktion des Phenols mit dem Aldehyd nicht nachteilig beeinflusst. Beispiele substituierter Phenole sind alkylsubstituierte, alkoxysubstituierte, arylsubstituierte und aryloxysubstituierte Phenole.

Die vorstehend genannten Substituenten haben beispielsweise 1 bis 26, bevorzugt 1 bis 15 Kohlenstoffatome. Beispiele geeigneter Phenole sind o-Kresol, m-Kresol, p-Kresol, 3,5-Xylenol, 3,4-Xylenol, 3,4,5-Trimethylphenol, 3-Ethylphenol, 3,5-Diethylphenol, p-Butylphenol, 3,5-Dibutylphenol, p-Amylphenol, Cyclohexylphenol, p-Octylphenol, p-Nonylphenol, Cardanol, 3,5-Dicyclohexylphenol, p-Crotylphenol, p-Phenylphenol, 3,5-Dimethoxyphenol und p-Phenoxyphenol.

Besonders bevorzugt ist Phenol selbst. Auch höher kondensierte Phenole, wie Bisphenol A, sind geeignet. Darüber hinaus eignen sich auch mehrwertige Phenole, die mehr als eine phenolische Hydroxylgruppe aufweisen. Bevorzugte mehrwertige Phenole weisen 2 bis 4 phenolische Hydroxylgruppen auf. Spezielle Beispiele geeigneter mehrwertiger Phenole sind Brenzkatechin, Resorcin, Hydrochinon, Pyrogallol, Phloroglucin, 2,5-Dimethylresorcin, 4,5-Dimethylresorcin, 5-Methylresorcin oder 5-Ethylresorcin. Es können auch Gemische aus verschiedenen ein- und mehrwertigen und/oder substituierten und/oder kondensierten Phenolkomponenten für die Herstellung der Polyolkomponente verwendet werden.

In einer Ausführungsform werden Phenole der allgemeinen Formel I: 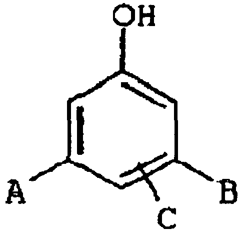 zur Herstellung der Phenolharzkomponente verwendet, wobei A, B und C unabhängig voneinander ausgewählt sind aus: einem Wasserstoffatom, einem verzweigten oder unverzweigten Alkylrest, der beispielsweise 1 bis 26, vorzugsweise 1 bis 15 Kohlenstoffatome aufweisen kann, einem verzweigten oder unverzweigten Alkoxyrest, der beispielsweise 1 bis 26, vorzugsweise 1 bis 15 Kohlenstoffatome aufweisen kann, einem verzweigten oder unverzweigten Alkenoxyrest, der beispielsweise 1 bis 26, vorzugsweise 1 bis 15 Kohlenstoffatome aufweisen kann, einem Aryl- oder Alkylarylrest, wie beispielsweise Bisphenyle.

Als Aldehyd zur Herstellung der Phenolharzkomponente eignen sich Aldehyde der Formel:

R-CHO,

wobei R ein Wasserstoffatom oder ein Kohlenstoffatomrest mit vorzugsweise 1 bis 8, besonders bevorzugt 1 bis 3 Kohlenstoffatomen ist. Spezielle Beispiele sind Formaldehyd, Acetaldehyd, Propionaldehyd, Furfurylaldehyd und Benzaldehyd. Besonders bevorzugt wird Formaldehyd eingesetzt, entweder in seiner wässrigen Form, als para-Formaldehyd, oder Trioxan.

Um die Phenolharze zu erhalten, wird vorzugsweise eine mindestens äquivalente Molzahl an Aldehyd, bezogen auf die Molzahl der Phenolkomponente, eingesetzt. Bevorzugt beträgt das Molverhältnis Aldehyd zu Phenol 1 : 1,0 bis 2,5: 1, besonders bevorzugt 1,1 : 1 bis 2,2 : 1, insbesondere bevorzugt 1,2 : 1 bis 2,0 : 1.

Die Herstellung des Phenolharzes erfolgt nach dem Fachmann bekannten Verfahren. Dabei werden das Phenol und der Aldehyd unter im Wesentlichen wasserfreien Bedingungen, insbesondere in Gegenwart eines zweiwertigen Metallions, bei Temperaturen von vorzugsweise weniger als 130°C umgesetzt. Das entstehende Wasser wird abdestilliert. Dazu kann der Reaktionsmischung ein geeignetes Schleppmittel zugesetzt werden, beispielsweise Toluol oder Xylol, oder die Destillation wird bei reduziertem Druck durchgeführt.

Das Phenolharz wird so gewählt, dass eine Vernetzung mit der Polyisocyanatkomponente möglich ist. Für den Aufbau eines Netzwerkes sind Phenolharze, die Moleküle mit mindestens zwei Hydroxylgruppen im Molekül umfassen, notwendig.

Besonders geeignete Phenolharze sind unter der Bezeichnung "ortho-ortho"' oder "high-ortho"-Novolake bzw. Benzyletherharze bekannt. Diese sind durch Kondensation von Phenolen mit Aldehyden in schwach saurem Medium unter Verwendung geeigneter Katalysatoren erhältlich. Zur Herstellung von Benzyletherharzen geeignete Katalysatoren sind Salze zweiwertiger Ionen von Metallen, wie Mn, Zn, Cd, Mg, Co, Ni, Fe, Pb, Ca und Ba. Bevorzugt wird Zinkacetat verwendet. Die eingesetzte Menge ist nicht kritisch. Typische Mengen an Metallkatalysator betragen 0,02 bis 0,3 Gew.-%, bevorzugt 0,02 bis 0,15 Gew.-%, bezogen auf die Gesamtmenge an Phenol und Aldehyd.

Solche Harze sind z.B. in US 3,485,797 und in EP 1137500 B1 beschrieben, auf deren Offenbarung hiermit sowohl hinsichtlich der Harze selbst, als auch hinsichtlich ihrer Herstellung ausdrücklich Bezug genommen wird.

Die Phenolharzkomponente bzw. die Isocyanatkomponente des Bindemittelsystems wird bevorzugt als Lösung in einem organischen Lösungsmittel oder einer Kombination von organischen Lösungsmitteln eingesetzt. Lösungsmittel können z.B. deshalb erforderlich sein, um die Komponenten des Bindemittels in einem ausreichend niedrigviskosen Zustand zu halten. Dieser ist u. a. erforderlich, um eine gleichmäßige Vernetzung des feuerfesten Formstoffes und dessen Rieselfähigkeit zu erhalten.

Die Isocyanat- Komponente des Bindemittelsystems umfasst ein aliphatisches, cycloaliphatisches oder aromatisches Polyisocyanat, bevorzugt mit 2 bis 5 Isocyanatgruppen pro Molekül. Je nach den gewünschten Eigenschaften können auch Gemische von Isocyanaten eingesetzt werden.

Geeignete Polyisocyanate umfassen aliphatische Polyisocyanate, wie z.B. Hexamethylendiisocyanat, alicyclische Polyisocyanate wie z.B. 4,4'-Dicyclohexyl-methandiisocyanat und Dimethylderivate hiervon. Beispiele geeigneter aromatischer Polyisocyanate sind Toluol-2,4-diisocyanat, Toluol-2,6-diisocyanat, 1,5-Naphthalendiisocyanat, Triphenylmethantriisocyanat, Xylylendiisocyanat und Methylderivate hiervon, sowie Polymethylenpolyphenylisocyanate. Insbesondere bevorzugte Polyisocyanate sind aromatische Polyisocyanate, besonders bevorzugt sind Polymethylenpolyphenylpolyisocyanate wie z.B. technisches 4,4'-Diphenylmethandiisocyanat, d.h. 4,4'-Diphenylmethandiisocyanat mit einem Anteil an Isomeren und höheren Homologen.

Im Allgemeinen werden 10 bis 500 Gew.-% Polyisocyanatkomponente bezogen auf das Gewicht der Polyolkomponente eingesetzt, vorzugsweise 20 bis 300 Gew.-%.

Bis zu 80 Gew.-% der Isocyanat-Komponente können aus Lösungsmittel bestehen. Als Lösungsmittel für das Polyisocyanat werden entweder aromatische Lösemittel, die oben genannten polaren Lösemittel oder Gemische davon, eingesetzt. Auch Fettsäureester und Kieselsäureester sind geeignet.

Bevorzugt wird das Polyisocyanat in einer Menge eingesetzt, dass die Anzahl der Isocyanatgruppen von 80 bis 120 %, bezogen auf die Anzahl der freien Hydroxylgruppen des Harzes, beträgt.

Erfindungsgemäß erhält das Polyurethan-Bindemittel zumindest einen Anteil eines cyclischen Formals. Cyclische Formale sind z.B. aus der Umsetzung von Diolen mit Formaldehyd erhältlich. Sofern dieses keine (freie) OH-Funktionalität besitzt, kann das cyclische Formal sowohl der Phenolharz-Komponente, als auch der Isocyanat - Komponente oder beiden zugemischt sein.

Die cyclischen Formale sind insbesondere durch folgende allgemeine Formel darstellbar: 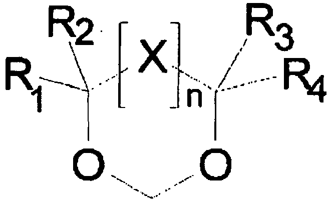 wobei
- X: ist -C(R₅)(R₆)- oder -R₇-O-R₈-
- n: für 0 bis 4 steht und
- R₁ bis R₆: unabhängig voneinander für H oder eine Kohlenwasserstoffgruppe, insbesondere Alkylgruppe, mit 1 bis 6 C-Atomen, wobei die Kohlenwasserstoffgruppe eine oder mehrere Ethergruppe und/oder eine oder mehrere Estergruppen enthalten kann und/oder mit Carbonyl- und/oder OH-Gruppe substituiert sein kann, und
- R₇ und R₈: unabhängig voneinander für eine Methylen-, Ethylen oder Propylengruppe stehen.

Beispiele cyclischer Formale sind Ethylenglykolformal, Propylenglykolformal, Diethylenglykolformal, 1,2-Butandiolformal, 1,3-Butandiolformal, 1,4-Butandiolformal, Neopentylglykolformal, Glycerinformal (Mischung aus 5-Hydroxy-1,3-dioxan und 4-Hydroxymethyl-1,3-dioxolan), Pentaerythritformal und 5-Ethyl-5-hydroxymethyl-1,3-dioxan. Bevorzugt ist 5-Ethyl-5-hydroxymethyl-1,3-dioxan.

Es ist nicht notwendig, das cyclische Formal mit hoher Reinheit einzusetzen, man kann auch kommerziell erhältliche Gemische einsetzen, die einen gewissen Anteil an cyclischem Formal wie 5-Ethyl-5-hydroxymethyl-1,3-dioxan enthalten. Ein Beispiel für ein solches Gemisch ist Polyol TD, in dem das Formal zu 25 bis 60 % neben 2-Ethyl-1,3-propandiol und Trimethylolpropan vorliegt.

Das cyclische Formal kann als Lösungsmittel neben weiteren Lösungsmitteln eingesetzt werden. Hierzu sind alle Lösungsmittel geeignet, die konventionell in Bindemittelsystemen für die Gießereitechnik Verwendung finden.

Als Lösungsmittel für die Phenolharzkomponente können neben den aromatischen Lösemitteln weiterhin sauerstoffreiche polare, organische Lösungsmittel verwendet werden. Geeignet sind vor allem Dicarbonsäureester, Glykoletherester, Glykoldiester, Glykoldiether, cyclische Ketone, cyclische Ester (Lactone), cyclische Carbonate oder Kieselsäureester. Bevorzugt werden Dicarbonsäureester, cyclische Ketone und cyclische Carbonate verwendet.

Dicarbonsäureester weisen die Formel R₁OOC-R₂-COOR₁ auf, wobei R₁ jeweils unabhängig voneinander eine Alkylgruppe mit 1 bis 12, bevorzugt 1 bis 6, Kohlenstoffatomen darstellt und R₂ eine Alkylengruppe mit 1 bis 4 Kohlenstoffatomen ist. Beispiele sind Dimethylester von Carbonsäuren mit 4 bis 6 Kohlenstoffatomen, die z.B. unter der Bezeichnung Dibasic Ester von DuPont erhältlich sind.

Glykoletherester sind Verbindungen der Formel R₃-O-R₄-OOCR₅, wobei R₃ eine Alkylgruppe mit 1 bis 4 Kohlenstoffatomen darstellt, R₄ eine Alkylengruppe mit 2 bis 4 Kohlenstoffatomen ist und R₅ eine Alkylgruppe mit 1 bis 3 Kohlenstoffatomen ist, z.B. Butylglykolacetat, bevorzugt sind Glykoletheracetate. Glykoldiester weisen entsprechend die allgemeine Formel R₃COO-R₄-OOCR₅ auf, wobei R₃ bis R₅ wie oben definiert sind und die Reste jeweils unabhängig voneinander ausgewählt werden (z.B. Propylenglykoldiacetat). Bevorzugt sind Glykoldiacetate. Glykoldiether lassen sich durch die Formel R₃-O-R₄-O-R₅ charakterisieren, in der R₃ bis R₅ wie oben definiert sind und die Reste jeweils unabhängig voneinander ausgewählt werden (z.B, Dipropylenglykoldimethylether).

Cyclische Ketone, cyclische Ester und cyclische Carbonate mit 4 bis 5 Kohlenstoffatomen sind ebenfalls geeignet (z.B. Propylencarbonat). Die Alkyl- und Alkylengruppen können jeweils verzweigt oder unverzweigt sein.

Geeignet sind auch Fettsäurester wie z.B. Rapsölfettsäuremethylester oder Ölsäurebutylester.

Neben den bereits erwähnten Bestandteilen können die Bindemittelsysteme Zusätze enthalten, z. B. Silane (z.B. gemäß EP 1137500 B1) oder interne Trennmittel, z. B. Fettalkohole (z.B. gemäß US 4,602,069), trocknende Öle (z.B. gemäß US 4,268,425) oder Komplexbildner (z.B. gemäß US 5,447,968) oder Gemische davon.

Geeignete Silane sind beispielsweise Aminosilane, Epoxysilane, Mercaptosilane, Hydroxysilane und Ureidosilane, wie γ-Hydroxypropyltrimethoxysilan, γ-Amino-propyltrimethoxysilan, 3-Ureidopropyltriethoxysilan, γ-Mercaptopropyltrimethoxy-silan, γ-Glycidoxypropyltrimethoxysilan, ß-(3,4-Epoxycyclohexyl)trimethoxysilan und N-ß-(Aminoethyl)-y-aminopropyltrimethoxysilan.

Für die Herstellung der Formstoffmischung können zuerst die Komponenten des Bindemittelsystems vereinigt und dann zu dem feuerfesten Formgrundstoff zugegeben werden. Es ist jedoch auch möglich, die Komponenten des Bindemittels gleichzeitig oder nacheinander zu dem feuerfesten Formgrundstoff zu geben.

Um eine gleichmäßige Mischung der Komponenten der Formstoffmischung zu erzielen, können übliche Verfahren verwendet werden. Die Formstoffmischung kann zusätzlich gegebenenfalls andere konventionelle Bestandteile, wie Eisenoxid, gemahlene Flachsfasern, Holzmehlgranulate, Pech und refraktäre Metalle enthalten.

Als weiteren Gegenstand betrifft die Erfindung ein Verfahren zur Herstellung eines Formkörpers, mit den Schritten:
- Bereitstellen der oben beschriebenen Formstoffmischung;
- Ausformen der Formstoffmischung zu einem Formkörper;
- Aushärten des Formkörpers durch Zugabe eines Aushärtungskatalysators.

Zur Herstellung des Formkörpers wird zunächst wie oben beschrieben das Bindemittel mit dem feuerfesten Formgrundstoff zu einer Formstoffmischung vermischt. Soll die Herstellung des Formkörpers nach dem PU-No-Bake-Verfahren erfolgen, kann der Formstoffmischung auch bereits ein geeigneter Katalysator zugegeben werden. Bevorzugt werden dazu flüssige Amine zur Formstoffmischung gegeben. Diese Amine weisen bevorzugt einen pK_{b}-Wert von 4 bis 11 auf. Beispiele geeigneter Katalysatoren sind 4-Alkylpyridine, wobei die Alkylgruppe 1 bis 4 Kohlenstoffatome umfasst, Isochinolin, Arylpyridine, wie Phenylpyridin, Pyridin, Acrylin, 2-Methoxypyridin, Pyridazin, Chinolin, N-Methylimidazol, 4,4'-Dipyridin, Phenylpropylpyridin, 1-Methylbenzimidazol, 1,4-Thiazin, N,N-Dimethylbenzylamin, Triethylamin, Tribenzylamin, N,N-Dimethyl-1,3-Propandiamin, N,N-Dimethylethanolamin sowie Triethanolamin. Der Katalysator kann gegebenenfalls mit einem inerten Lösungsmittel verdünnt werden, beispielsweise 2,2,4-Trimethyl-1,3-pentandiol-diisobutyrat, oder einem Fettsäureester. Die Menge des zugegebenen Katalysators wird, bezogen auf das Gewicht der Polyolkomponente, im Bereich von 0,1 bis 15 Gew.-% gewählt.

Die Formstoffmischung wird dann mit üblichen Mitteln in eine Form eingebracht und dort verdichtet. Die Formstoffmischung wird anschließend zu einem Formkörper ausgehärtet. Bei der Härtung sollte der Formkörper bevorzugt seine äußere Form behalten.

Gemäß einer weiteren bevorzugten Ausführungsform erfolgt die Aushärtung nach dem PU-Cold-Box-Verfahren. Dazu wird ein gasförmiger Katalysator durch die geformte Formstoffmischung geleitet. Als Katalysator können die üblichen Katalysatoren auf dem Gebiet des Cold-Box-Verfahrens verwendet werden. Besonders bevorzugt werden Amine als Katalysatoren verwendet, insbesondere bevorzugt Dimethylethylamin, Dimethyl-n-propylamin, Dimethylisopropylamin, Dimethyl-n-butylamin, Triethylamin und Trimethylamin in ihrer gasförmigen Form oder als Aerosol.

Der mit dem Verfahren hergestellte Formkörper kann an sich jede auf dem Gebiet der Gießerei übliche Form aufweisen. In einer bevorzugten Ausführungsform liegt der Formkörper in Form von Gießereiformen oder -kernen vor.

Weiter betrifft die Erfindung einen Formkörper, wie er mit dem oben beschriebenen Verfahren erhalten werden kann. Dieser zeichnet sich durch eine hohe mechanische Stabilität sowie durch eine geringe Qualmentwicklung beim Metallguss aus.

Weiter betrifft die Erfindung die Verwendung dieses Formkörpers für den Metallguss, insbesondere Eisen- sowie Aluminiumguss. Die Erfindung wird im Weiteren anhand von bevorzugten Ausführungsformen näher erläutert.

### Beispiele

### 1. Herstellung des Phenolharzes

In einem Reaktionsgefäß, das mit Kühler, Thermometer und Rührer ausgestattet war, wurden 999,65 g einer Mischung aus Phenol und Paraformaldehyd (91%ig) mit einem molaren Formaldehyd/Phenolverhältnis von 1,24:1 und 0,35 g Zinkacetat-Dihydrat vorgelegt. Der Kühler wurde auf Rückfluss gesetzt, die Temperatur kontinuierlich ansteigend auf 108 bis 112°C gebracht und das Reaktionsgemisch 3,5 h bei dieser Temperatur gehalten. Anschließend wurde der Kühler auf atmosphärische Destillation umgestellt und die Temperatur kontinuierlich unter Destillation innerhalb einer Stunde auf 124 bis 126°C erhöht. Diese Temperatur wurde 30 Minuten lang gehalten. Danach wurde unter einem Vakuum von 450 mbar 5 Minuten lang destilliert.

### 2. Herstellung der Phenolharzlösungen

Das nach obiger Vorschrift hergestellte Phenolharz wurde mit den in Tabelle 1 aufgeführten Bestandteilen zur Polyolkomponente des Polyurethan- Bindemittelsystems verdünnt.

Als Isocyanatkomponente des Polyurethanbindemittelsystems diente ein Gemisch aus 80 % technischem polymeren MDI und 20 % Solvent Naphtha leicht.

**Tabelle 1**

| | nicht erfindungs-gemäß | | erfindungsgemäß | | | | | | | | |
|---|---|---|---|---|---|---|---|---|---|---|---|
| Versuch | 1.1 | 1.2 | 1.3 | 1.4 | 1.5 | 1.6 | 1.7 | 1.8 | 1.9 | 1.10 | 1.11 |
| Phenolharz | 53,0 | 48,0 | 53,0 | 53,0 | 53,0 | 53,0 | 53,0 | 48,0 | 48,0 | 48,0 | 48,0 |
| Isophoron | 7,8 | 8,6 | 6,9 | 6,1 | 5,3 | 6,9 | 6,1 | 7,8 | 6,9 | 7,8 | 6,9 |
| Solvent Naphtha leicht | 20,0 | 21,0 | 17,8 | 15,7 | 13,5 | 17,8 | 15,7 | 20,0 | 17,8 | 20,0 | 17,8 |
| Phthalatweichmacher | 15,7 | 17,4 | 14,0 | 12,3 | 10,6 | 14,0 | 12,3 | 15,7 | 14,0 | 15,7 | 14,0 |
| Tallölfettsäurebutylester | 3,0 | 4,5 | 2,7 | 2,4 | 2,1 | 2,7 | 2,4 | 3,0 | 2,7 | 3,0 | 2,7 |
| Silan | 0,5 | 0,5 | 0,5 | 0,5 | 0,5 | 0,5 | 0,5 | 0,5 | 0,5 | 0,5 | 0,5 |
| Polyol CTF ^{a)} | - | - | 5,0 | 10,0 | 15,0 | - | - | 5,0 | 10,0 | - | - |
| Polyol TD ^{b)} | - | - | - | - | - | 5,0 | 10,0 | - | - | 5,0 | 10,0 |

| | | | | | | | | | | | |
|---|---|---|---|---|---|---|---|---|---|---|---|
| a) Polyol CTF, 5-Ethyl-5-hydroxymethyl-1,3-dioxan (Perstorp Specialty Chemicals AB) b) Polyol TD, Polyolmischung enthaltend 5-Ethyl-5-hydroxymethyl-1,3-dioxan (Perstorp Specialty Chemicals AB) | | | | | | | | | | | |

### 3. Herstellung der Prüfriegel und Bestimmung der Biegefestigkeiten im Polyurethan-Cold-Box-Verfahren

Zu 100 Gewichtsteilen Quarzsand H 32 (Firma Quarzwerke Frechen) wurden nacheinander jeweils 0,8 Gew.% der in Tabelle 1 angegebenen Phenolharzlösungen und der Polyisocyanatkomponente (Teil 2) gegeben und in einem Labormischer (Firma Vogel und Schemmann AG) intensiv gemischt. Nachdem die Mischung für 2 Minuten gemischt worden war, wurden die Formstoffmischungen in den Vorratsbehälter einer Kernschießmaschine (Firma Röperwerke Gießereimaschinen GmbH) überführt und mittels Druckluft (4 bar) in das Formwerkzeug eingebracht. Die Formkörper wurden durch Begasen mit 1 ml Triethylamin (2 sek., 2 bar Druck, danach 10 sek. Spülen mit Luft) ausgehärtet. Als Prüfkörper werden quaderförmige Prüfriegel mit den Abmessungen 220 mm x 22,36 mm x 22,36 mm, sogenannte Georg-Fischer-Prüfriegel, hergestellt. Zur Bestimmung der Biegefestigkeiten wurden die Prüfriegel in ein Georg-Fischer Festigkeitsprüfgerät, ausgerüstet mit einer Drei-Punkt-Biegevorrichtung (Firma Simpson Technologies GmbH), eingelegt und die Kraft gemessen, welche zum Bruch der Prüfriegel führte. In Tabelle 2 sind die Biegefestigkeiten aufgelistet.

**Tabelle 2**

| Festigkeiten [N/cm²] | nicht erfindungs-gemäß | | erfindungsgemäß | | | | | | | | |
|---|---|---|---|---|---|---|---|---|---|---|---|
| Versuch | 1.1 | 1.2 | 1.3 | 1.4 | 1.5 | 1.6 | 1.7 | 1.8 | 1.9 | 1.10 | 1.11 |
| sof. | 180 | 115 | 210 | 205 | 200 | 215 | 200 | 160 | 180 | 160 | 180 |
| 0,5 h | 400 | 330 | 440 | 410 | 410 | 440 | 410 | 380 | 410 | 410 | 420 |
| 1 h | 420 | 380 | 460 | 450 | 420 | 460 | 440 | 430 | 490 | 430 | 430 |
| 2h | 450 | 390 | 470 | 460 | 460 | 465 | 460 | 435 | 490 | 430 | 430 |
| 24 h | 540 | 470 | 590 | 580 | 560 | | | | | | |

Aus Tabelle 2 erkennt man, dass die Verwendung cyclischer Formale die Festigkeiten erhöht. Die relative Festigkeitssteigerung ist besonders hoch bei Formulierungen mit einem reduzierten Gehalt an Phenolharz im Teil I (vgl. 1.2 relativ zu 1.8 bis 1.11).

### 4. Herstellung der Prüfriegel und Bestimmung der Biegefestigkeiten im Polyurethan-No-Bake-Verfahren

Die in Tabelle 1 aufgelisteten Polyol-Komponenten lassen sich auch nach dem Polyurethan-No-Bake-Verfahren aushärten. Dieses Verfahren unterscheidet sich vom Cold-Box-Verfahren dadurch, dass die Aushärtung der Formstoffmischungen nicht durch Begasen mit einem flüchtigen Amin katalysiert wurden, sondern durch die Zugabe eines flüssigen Katalysators. Dieser kann z.B. vorab in der Polyolkomponente gelöst oder der Formstoffmischung während des Mischvorgangs zugegeben werden. Die Formgebung erfolgt i.d.R. auch nicht mit Hilfe von Kernschießmaschinen, sondern durch einfaches Füllen der Formwerkzeuge mit anschließender Verdichtung per Hand oder durch Rütteln. Als Beispiele für das Polyurethan- No-Bake-Verfahren wurden die Polyol-Komponenten 1.1, 1.3 und 1.8 herangezogen, denen jeweils vor der Formstoffherstellung 0,8 Gew.% 4-Phenylpropylpyridin zugesetzt wurden.

In Tabelle 3 sind die mit den genannten Mischungen gefundenen Werte aufgelistet.

**Tabelle 3**

| | nicht erfindungsgemäß | erfindungsgemäß | |
|---|---|---|---|
| Versuch | 1.1 | 1.3 | 1.8 |
| Verarbeitungszeit [min.]^{a)} | 3 | 5 | 5 |
| Ausschalzeit [min.]^{b)} | 7 | 8 | 7 |
| Festigkeiten [N/cm²] | | | |
| 0,5 h | 230 | 230 | 215 |
| 1 h | 295 | 275 | 280 |
| 2 h | 330 | 325 | 325 |
| 24 h | 420 | 460 | 400 |

| | | | |
|---|---|---|---|
| a) verfügbare Zeit zur Verdichtung der Formstoffmischung b) Zeit, nach welcher der Kern so stabilisiert, dass er dem Formwerkzeug entnommen werden kann | | | |

Im Polyurethan-No-Bake-Verfahren zeigt es sich, dass das cyclische Formal unter Beibehaltung der guten Festigkeiten die Verarbeitungszeiten verlängert, wobei sich die Ausschalzeiten nicht oder nur geringfügig ändern. Dies ist in vielen Fällen günstig, da bei der Herstellung von großen Formen und Kernen mehr Zeit zur Verfügung steht, die Formstoffmischungen gut zu verdichten.

## Patentansprüche

1. Bindemittel für Formstoffmischungen enthaltend
(A) zumindest eine Phenolharz-Komponente als Polyol-Komponente aufweisend ein Phenolharz, wobei das Phenolharz erhältlich ist aus der Umsetzung einer Phenol-Verbindung und einer Aldehyd-Verbindung,
(B) zumindest eine Isocyanat-Komponente aufweisend zumindest ein Polyisocyanat mit mindestens zwei NCO-Gruppen pro Molekül und
(C) zumindest eine Lösungsmittel-Komponente aufweisend ein cyclisches Formal, ggf. auch als Teil der Komponenten (A) und/oder (B), neben ggf. weiterem Lösungsmittel, wobei das cyclische Formal folgende Formel aufweist: 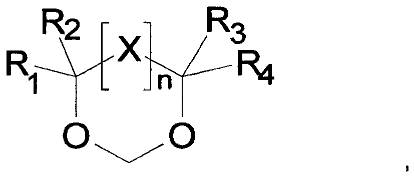 worin
X ist -C(R₅)(R₆)- oder -R₇-O-R₈-
n für 0 bis 4 steht und
R₁ bis R₆ unabhängig voneinander für H oder eine Kohlenwasserstoffgruppe, insbesondere Alkylgruppe, mit 1 bis 6 C-Atomen, wobei die Kohlenwasserstoffgruppe eine oder mehrere Ethergruppen und/oder eine oder mehrere Estergruppen enthalten kann und/oder mit Carbonyl- und/oder OH-Gruppe(n) substituiert sein kann, und
R₇ und R₈ unabhängig voneinander für eine Methylen-, Ethylen oder Propylengruppe stehen,
oder aus 1,4-Butandiolformal, Glycerinformal, Ethylenglykolformal, Propylenglykolformal oder 1,2-Butandiolformal ausgewählt ist.

2. Bindemittel gemäß Anspruch 1, wobei das cyclisches Formal ausgewählt ist aus einem oder mehreren Mitgliedern der folgenden Gruppe:
1,3-Butandiolformal, 1,4-Butandiolformal, Glycerinformal und 5-Ethyl-5-Hydroxymethyl-1,3-Dioxan.

3. Bindemittel gemäß Anspruch 1, wobei das cyclische Formal 5-Ethyl-5-Hydroxymethyl-1,3-Dioxan ist.

4. Bindemittel gemäß Anspruch 1 wobei das Polyisocyanat ein aromatisches Polyisocyanat ist.

5. Bindemittel gemäß Anspruch 1 wobei das Polyisocyanat Polymethylenpolyphenylpolyisocyanat ist.

6. Bindemittel gemäß Anspruch 1, wobei das Phenolharz erhältlich ist durch Umsetzung einer Phenol-Verbindung mit einer Aldehyd-Verbindung in schwach saurem Medium unter Verwendung von Übergangsmetall- Katalysatoren, insbesondere Zink-Katalysatoren.

7. Bindemittel gemäß Anspruch 6, wobei der Katalysator eine ZinkVerbindung ist, insbesondere Zinkacetat-Dihydrat.

8. Bindemittel gemäß Anspruch 1, wobei das Phenolharz ein Benzyletherharz ist.

9. Bindemittel gemäß Anspruch 1 oder 6, wobei die Phenol-Verbindung ausgewählt ist aus einem oder mehreren Mitgliedern der folgenden Gruppe: Phenol, o-Kresol, p-Kresol, Bisphenol A oder Cardanol.

10. Bindemittel gemäß Anspruch 1 oder 6, wobei die Aldehyd-Verbindung ein Aldehyd der Formel:
R-CHO ,
ist, worin für R ein Wasserstoffatom oder einen Kohlenstoffrest mit vorzugsweise 1 bis 8, besonders bevorzugt 1 bis 3, Kohlenstoffatomen steht.

11. Bindemittel gemäß einem oder mehreren der vorhergehenden Ansprüche, wobei die Komponenten wie folgt in dem Bindemittel enthalten sind:
(A) 15 bis 35 Gew.%, insbesondere 20 bis 30 Gew.%, Phenolharz,
(B) 25 bis 45 Gew.%, insbesondere 35 bis 45 Gew.%, Polyisocyanat und
(C)20 bis 60 Gew.%, insbesondere 25 bis 45 Gew.%, Lösungsmittel.

12. Bindemittel gemäß einem oder mehreren der vorhergehenden Ansprüche, wobei das gesamte Bindemittel zu 0,25 bis 20 Gew.%, bevorzugt zu 0,5 bis 15 Gew.% und insbesondere bevorzugt zu 1 bis 10 Gew.%, cyclische Formale enthält.

13. Bindemittel gemäß einem oder mehreren der vorhergehenden Ansprüche, wobei als Lösungsmittel-Komponente neben cyclischen Acetalen aromatische Kohlenwasserstoffe, Ester, Ketone und/oder Weichmacher eingesetzt werden.

14. Formstoffmischung enthaltend das Bindemittel gemäß einem oder mehreren der vorhergehenden Ansprüche und einen feuerfesten Formstoff, wobei der Formstoff enthält oder besteht aus Siliciumdioxid, z.B. in der Form von Quarz-, Zirkon- oder Chromerzsand, Olivin, Schamotte, Bauxit, Aluminiumsilikathohlkugeln, Glasperlen, Glasgranulat und/oder synthetischen keramischen Formgrundstoffen.

15. Verfahren zur Herstellung eines Gießformteils oder eines Kerns, umfassend zumindest die Schritte
(a) Vermischen von Feuerfeststoffen mit dem Bindemittel gemäß einem oder mehreren der Ansprüche 1 bis 13 in einer Menge von 0,2 bis 5 Gew,-%, bevorzugt 0,3 bis 4 Gew.-%, besonders bevorzugt 0,4 bis 3 Gew.-%, bezogen auf die Menge der Feuerfeststoffe, zum Erhalt eines Gießgemisches;
(b) Einbringen des Gießgemischs in ein Formwerkzeug;
(c) Härten des Gießgemischs im Formwerkzeug, um eine selbsttragende Form zu erhalten; und
(d) anschließendes Trennen des gehärteten Gießformteils vom Werkzeug und ggf. weiteres Härten, wodurch man ein festes, ausgehärtetes Gießformteil erhält.

16. Verfahren gemäß Anspruch 15, wobei zum Aushärten eingesetzt wird Dimethylethylamin, Dimethyl-n-propylamin, Dimethylisopropylamin, Dimethyl-n-butylamin, Triethylamin und/oder Trimethylamin, jeweils gasförmig oder als Aerosol.

17. Verfahren gemäß Anspruch 15, wobei zum Aushärten ein flüssiger Katalysator eingesetzt wird, z.B. Phenylpropylpyridin.

## Claims

1. A binder for molding material mixtures containing
(A) at least one phenolic resin component as a polyol component comprising a phenolic resin, wherein the phenolic resin is obtainable by reacting a phenol compound with an aldehyde compound,
(B) at least one isocyanate component having at least one polyisocyanate with at least two NCO groups per molecule and
(C) at least one solvent component comprising a cyclic formal, optionally also as a part of components (A) and/or (B), optionally beside additional solvent, wherein the cyclic formal has the following formula: 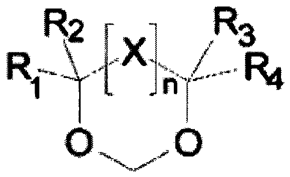 wherein
X denotes -C(R₅)(R₆)- or -R₇-O-R₈-
n denotes 0 to 4 and
R₁ to R₆ independently denote H or a hydrocarbon group, particularly an alkyl group, having 1 to 6 C atoms, wherein the hydrocarbon group can contain one or more ether groups and/or one or more ester groups, and/or can be substituted with a carbonyl and/or OH group(s), and
R₇ and R₈ independently denote a methylene, ethylene or propylene group,
or is selected from 1,4-butanediol formal, glycerin formal, ethylene glycol formal, propylene glycol formal or 1,2-butanediol formal.

2. The binder according to claim 1, wherein the cyclic formal is selected from one or more members of the following group:
1,3-butanediol formal, 1,4-butanediol formal, glycerin formal, and 5-ethyl-5-hydroxymethyl-1,3-dioxane.

3. The binder according to claim 1, wherein the cyclic formal is 5-ethyl-5-hydroxymethyl-1,3-dioxane.

4. The binder according to claim 1, wherein the polyisocyanate is an aromatic polyisocyanate.

5. The binder according to claim 1, wherein the polyisocyanate is polymethylene polyphenyl polyisocyanate.

6. The binder according to claim 1, wherein the phenolic resin can be obtained by reacting a phenol compound with an aldehyde compound in a weakly acidic medium using transition metal catalysts, particularly zinc catalysts.

7. The binder according to claim 6, wherein the catalyst is a zinc compound, particularly zinc acetate dihydrate.

8. The binder according to claim 1, wherein the phenolic resin is a benzyl ether resin.

9. The binder according to claim 1 or 6, wherein the phenol compound is selected from one or more members of the following group: phenol, o-cresol, p-cresol, bisphenol A or cardanol.

10. The binder according to claim 1 or 6, wherein the aldehyde compound is an aldehyde of the formula:
R-CHO,
wherein R denotes a hydrogen atom or a carbon group having preferably 1 to 8, particularly preferably 1 to 3, carbon atoms.

11. The binder according to one or more of the preceding claims, wherein the components are contained in the binder as follows:
(A) 15 to 35 wt%, particularly 20 to 30 wt%, phenolic resin,
(B) 25 to 45 wt%, particularly 35 to 45 wt%, polyisocyanate and
(C)20 to 60 wt%, particularly 25 to 45 wt%, solvent.

12. The binder according to one or more of the preceding claims, wherein the entire binder contains up to 0.25 to 20 wt%, preferably 0.5 to 15 wt%, and particularly preferably 1 to 10 wt%, cyclic formals.

13. The binder according to one or more of the preceding claims, wherein aromatic hydrocarbons, esters, ketones and/or plasticiser are used as solvent components, in addition to cyclic acetals.

14. A molding material mixture containing the binder according to one or more of the preceding claims and a refractory molding material, wherein the molding material contains or consists of silicon dioxide, e.g., in the form of quartz ore sand, zirconium ore sand or chromium ore sand, olivine, chamotte, bauxite, aluminum silicate hollow spheres, glass beads, glass granules and/or synthetic ceramic basic molding materials.

15. A method for producing a cast molding piece or a core, comprising at least the following steps
(a) combining refractory materials with the binder according to one or more of claims 1 to 13 in a quantity of 0.2 to 5 wt%, preferably 0.3 to 4 wt%, particularly preferably 0.4 to 3 wt%, referred to the quantity of refractory materials, to obtain a casting mixture;
(b) introducing the casting mixture into a mold;
(c) hardening the casting mixture in the mold to obtain a self-supporting form; and
(d) then separating the hardened cast material piece from the mold and optionally hardening said piece further, whereby a solid, cured molded cast piece is obtained.

16. The method according to claim 15, wherein dimethylethylamine, dimethyl-n-propylamine, dimethylisopropylamine, dimethyl-n-butylamine, triethylamine and/or trimethylamine, each in gaseous form or as an aerosol, is used for curing.

17. The method according to claim 15, wherein a liquid catalyst, e.g., phenylpropyl pyridine, is used for curing.

## Revendications

1. Liant pour des mélanges de matières à mouler comprenant :
(A) au moins un composant de résine phénolique à titre de composant polyol présentant une résine phénolique, la résine phénolique pouvant être obtenue à partir de la réaction d'un composé phénolique et d'un composé aldéhyde,
(B) au moins un composant isocyanate présentant au moins un polyisocyanate ayant au moins deux groupes NCO par molécule et
(C) au moins un composant solvant présentant un formal cyclique, le cas échéant aussi sous forme de partie des composants (A) et/ou (B), en plus d'un autre solvant le cas échéant, dans lequel le formal cyclique répond à la formule suivante : 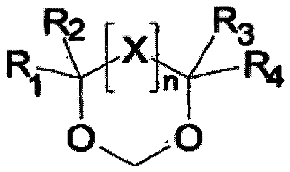 dans laquelle
X est -C(R₅)(R₆)- ou -R₇-O-R₈-
n est un nombre de 0 à 4 et
R₁ à R₆ représentent, indépendamment les uns des autres, H ou un groupe hydrocarbure, en particulier un groupe alkyle, ayant de 1 à 6 atomes de C, le groupe hydrocarbure pouvant comprendre un ou plusieurs groupes éther et/ou un ou plusieurs groupes ester et/ou pouvant être substitué par un ou des groupes carbonyle et/ou OH, et
R₇ et R₈ représentent, indépendamment les uns des autres, un groupe méthylène, éthylène ou propylène,
ou est choisi parmi le 1,4-butanediol formal, le glycérol formal, l'éthylène glycol formal, le propylène glycol formal ou le 1,2-butanediol formal.

2. Liant selon la revendication 1, dans lequel le formal cyclique est choisi parmi un ou plusieurs éléments du groupe suivant :
le 1,3-butanediol formal, le 1,4-butanediol formal, le glycérol formal et le 5-éthyl-5-hydroxyméthyl-1,3-dioxane.

3. Liant selon la revendication 1, dans lequel le formal cyclique est le 5-éthyl-5-hydroxyméthyl-1,3 -dioxane.

4. Liant selon la revendication 1, dans lequel le polyisocyanate est un polyisocyanate aromatique.

5. Liant selon la revendication 1, dans lequel le polyisocyanate est le polyisocyanate de polyméthylène polyphényle.

6. Liant selon la revendication 1, dans lequel la résine phénolique peut être obtenue par réaction d'un composé phénolique avec un composé aldéhyde dans un milieu faiblement acide en utilisant les catalyseurs d'un métal de transition, en particulier des catalyseurs de zinc.

7. Liant selon la revendication 6, dans lequel le catalyseur est un composé de zinc, en particulier un acétate de zinc dihydraté.

8. Liant selon la revendication 1, dans lequel la résine phénolique est une résine d'éther benzylique.

9. Liant selon la revendication 1 ou 6, dans lequel le composé phénolique est choisi parmi un ou plusieurs éléments du groupe suivant : phénol, o-crésol, p-crésol, bisphénol A ou cardanol.

10. Liant selon la revendication 1 ou 6, dans lequel le composé aldéhyde est un aldéhyde de formule :
R-CHO,
dans laquelle R est un atome d'hydrogène ou un radical carbone ayant de préférence de 1 à 8, particulièrement préférentiellement de 1 à 3 atomes de carbone.

11. Liant selon une ou plusieurs des revendications précédentes, dans lequel les composants sont présents dans le liant en les proportions suivantes :
(A) 15 à 35 % en poids, en particulier 20 à 30 % en poids de résine phénolique,
(B) 25 à 45 % en poids, en particulier 35 à 45 % en poids de polyisocyanate, et
(C) 20 à 60 % en poids, en particulier 25 à 45 % en poids de solvant.

12. Liant selon une ou plusieurs des revendications précédentes, dans lequel la proportion totale de liant comprend de 0,25 à 20 % en poids, de préférence de 0,5 à 15 % en poids et particulièrement préférentiellement de 1 à 10 % en poids de formals cycliques.

13. Liant selon une ou plusieurs des revendications précédentes, dans lequel on met en oeuvre des hydrocarbures aromatiques, des esters, des cétones et/ou des plastifiants à titre de composant solvant, en plus des acétals cycliques.

14. Mélange de matières à mouler comprenant le liant selon une ou plusieurs des revendications précédentes et une matière à mouler résistant au feu, dans lequel la matière à mouler comprend ou se compose de dioxyde de silicium, par exemple sous la forme de sable de quartzite, zirconite ou chromite, d'olivine, de chamotte, de bauxite, de billes creuses de silicate d'aluminium, de perles de verre, de granulés de verre et/ou de composants de base de moulage céramiques synthétiques.

15. Procédé de fabrication d'une partie de moule ou d'un noyau, comprenant au moins les étapes consistant à :
(a) mélanger des matières résistant au feu avec le liant selon une ou plusieurs des revendications 1 à 13 en une quantité de 0,2 à 5 % en poids, de préférence de 0,3 à 4 % en poids, particulièrement préférentiellement de 0,4 à 3 % en poids, par rapport à la quantité de matières résistant au feu, pour l'obtention d'un mélange de moulage ;
(b) introduire le mélange de moulage dans un outil de formage ;
(c) durcir le mélange de moulage dans l'outil de formage pour obtenir un moule autoportant ; et
(d) séparer ensuite la partie de moule durcie de l'outil et le cas échéant durcir encore une fois, ce qui permet d'obtenir une partie de moule durcie solide.

16. Procédé selon la revendication 15, dans lequel on met en oeuvre de la diméthylamine, de la diméthyl-n-propylamine, de la diméthylisopropylamine, de la diméthyl-n-butylamine, de la triéthylamine et/ou de la triméthylamine, respectivement sous forme gazeuse ou sous forme d'aérosol, pour le durcissement.

17. Procédé selon la revendication 15, dans lequel on met en oeuvre un catalyseur liquide pour le durcissement, par exemple de la phénylpropylpyridine.
